# EUROPÄISCHE PATENTANMELDUNG

(11) **EP 1 241 766 A1**
(43) Veröffentlichungstag der Anmeldung: **18.09.2002**
(21) Anmeldenummer: 02004808.8
(22) Anmeldetag: 02.03.2002
(51) Int. Cl.: H02G 11/00

(54) **Vorrichtung zum Führen von zumindest einer elektrischen Leitung**

(30) Priorität: 17.03.2001 DE 10112961
(71) Anmelder: Bircher AG, CH-8222 Beringen (CH)
(72) Erfinder: De Jager, Godert, 8604 Volketswil (CH)
(74) Vertreter: Weiss, Peter, Dr.

(57) **Zusammenfassung**

Bei einer Vorrichtung zum Führen von zumindest einer elektrischen Leitung (8) zur Energie- und/oder Datenübertragung für bewegbare Elemente (10) wie Türen und Tore soll die zumindest eine Leitung (8) zwischen einem festgelegten Ausgangspunkt (7) und dem bewegbaren Element (10) über zumindest eine Umlenkeinrichtung (1) geführt sein.

## Beschreibung

Die vorliegende Erfindung betrifft eine Vorrichtung zum Führen von zumindest einer elektrischen Leitung zur Energie- und/oder Datenübertragung für bewegbare Elemente, wie Türen und Tore.

Derartige Vorrichtungen zum Führen von elektrischen Leitungen, Kabeln, Datenleitungen etc. sind in vielfältiger Form und Ausführung auf dem Markt bekannt und gebräuchlich. Insbesondere in der Sicherheitstechnik werden elektrische Schaltleisten oder Druckwellenschalter verwendet, die als Einklemmschutz von Toren und Türen dienen. In der Regel sind derartige elektrische Schaltleisten oder Druckwellenschalter auf bewegten Teilen montiert. Werden derartige Schaltleisten beispielsweise mit Druck beaufschlagt, generieren diese ein elektrisches Signal, welches dann über spiralförmige Kabel oder aufwendige Kabelführungssysteme auf eine stationär befestigte Torsteuerung, Energiequelle oder Datenübertragungseinrichtung übertragen werden muss.

Derartige Spiralkabel haben den Nachteil, dass sie sehr oft durch den häufigen Gebrauch versagen und einem grossen Verschleiss unterliegen. Zudem sind herkömmliche bekannte Kabelführungssysteme sehr teuer in der Anschaffung oder benötigen einen zu grossen Einbauraum.

Auch bei hohen Geschwindigkeiten der bewegten Teile, insbesondere der Schnellauftore haben sich derartige bekannte Kabelführungssysteme als nachteilig erwiesen, da deren elektrische Leitungen sehr geringe Standzeiten besitzen und häufig ausgetauscht werden müssen. Werden diese herkömmlichen Kable beschädigt, entsteht ein Kurzschluss, was unerwünschte Folgen hat.

Zudem ist nachteilig, dass herkömmliche Kabelführungssysteme, insbesondere in der Sicherheitstechnik aufwendige Antriebssysteme erfordern, was zu teuer ist.

Der vorliegenden Erfindung liegt die Aufgabe zugrunde eine Vorrichtung zum Führen von elektrischen Leitungen, Kabel, Datenleitungen od. dgl. zu schaffen, mit welcher die genannten Nachteile beseitigt werden. Ferner sollen die Kabel spannungsfrei und formschlüssig bei einer höheren Lebensdauer geführt werden. Diese sollen einfach auszutauschen sein. Die Vorrichtung soll einen geringen Einbauraum aufweisen. Zudem soll eine exakte Führung bei grossen Wegen mögliche sein.

Zur Lösung dieser Aufgabe führt, dass die zumindest eine Leitung zwischen einem festgelegten Ausgangspunkt und dem bewegbaren Element über zumindest eine Umlenkeinrichtung geführt ist.

Bei der vorliegenden Erfindung wird über eine Umlenkeinrichtung ein Kabel von einem festgelegten Ausgangspunkt zu einem bewegbaren Punkt geführt. Dieser bewegbare Punkt dient als Übergangspunkt zu einem bewegbaren Element, beispielsweise eines Tores, Garagentores, Schnellauftores od. dgl.. Die Umlenkeinrichtung weist vorzugsweise jeweils beabstandete Umlenkelemente, Umlenkrollen od. dgl. auf, so dass über diese Umlenkrollen das Kabel bzw. die Leitung geführt ist. Vorzugsweise wird die Umlenkeinrichtung entlang von Seilzügen, Schienensystemen od. dgl. hin und her bewegt, wobei während des Bewegens sich gleichzeitig entsprechend der bewegende Punkt mitbewegt, der die elektrische Leitung trägt. Dabei wird zum Bewegen der Leitung ein Übergang zwischen dem bewegten Punkt bzw. dem bewegten Element geschaffen, indem beispielsweise ein elastisches Schlauchelement dazwischengeschaltet wird, um als Brücke für das Kabel zu dienen.

Die Umlenkeinrichtung gewährleistet ferner, dass das Kabel spannungsfrei und formschlüssig zwischen einem festgelegten Ausgangspunkt und einem bewegbaren Punkt geführt wird, wobei hierdurch die Lebensdauer erheblich gesteigert werden kann.

Zudem lässt sich eine derartige Umlenkeinrichtung sehr klein ausgestalten, die eine lineare, aber auch eine kurvenartige oder bogenartige Bewegung des bewegbaren Punktes zulässt. Nicht nur die lineare, sondern auch eine kurven- oder bogenartige Bewegung des bewegbaren Punktes soll im Rahmen der vorliegenden Erfindung liegen. Darauf sei die vorliegende Erfindung nicht beschränkt.

Dabei kann die Umlenkeinrichtung aus wenigstens zwei Umlenkelementen bestehen, die zueinander beabstandet sind. Diese können beispielsweise über wenigstens ein Distanzstück zueinander beabstandet sein, oder über weitere Umlenkelemente über zusätzliche äussere Seilzüge beabstandet gehalten werden, wobei die Umlenkeinrichtung hin und her bewegbar ausgebildet ist.

Auch soll daran gedacht sein die Umlenkeinrichtung in ein Profilelement mit Führungsschlitz einzusetzen, welches sich leicht nahe oder entlang eines Tores oder einer Tür montieren lässt.

Insgesamt ist mit der vorliegenden Erfindung eine Vorrichtung zum Führen von elektrischen Leitungen geschaffen, die sehr kostengünstig zu warten ist und mit welcher sehr hohe Standzeiten erreicht werden können. Dabei kann eine derartige Vorrichtung sehr kostengünstig und schnell installiert bzw. mit einem bewegbaren Element verbunden, insbesondere an ein Tor angeschlossen werden.

Weitere Vorteile, Merkmale und Einzelheiten ergeben sich aus der nachfolgenden Beschreibung bevorzugter Ausführungsbeispiele sowie anhand der Zeichnungen; diese zeigen in
Figur 1 eine schematisch dargestellte Seitenansicht auf eine Vorrichtung zum Führen von zumindest einer elektrischen Leitung;
Figur 2 eine schematisch dargestellte Seitenansicht auf ein weiteres Ausführungsbeispiel der Vorrichtung gemäss Figur 1 in einer Gebrauchslage;
Figur 3 eine vergrössert dargestellte Teilansicht einer Verbindungsstelle zwischen einer Vorrichtung und einem bewegbaren Element, insbesondere einem Tor;
Figuren 4 und 5 jeweils weitere schematisch dargestellte Seitenansichten der Vorrichtung gemäss Figur 2 in jeweils zwei weiteren Gebrauchslagen;
Figur 6 eine schematisch dargestellte Seitenansicht eines weiteren Ausführungsbeispiels der Vorrichtung gemäss den Figuren 1 und 2;
Figur 7 eine perspektivisch dargestellte Teilansicht eines Profilelementes mit Führungsschlitz zum Aufnehmen zumindest einer Umlenkeinrichtung.

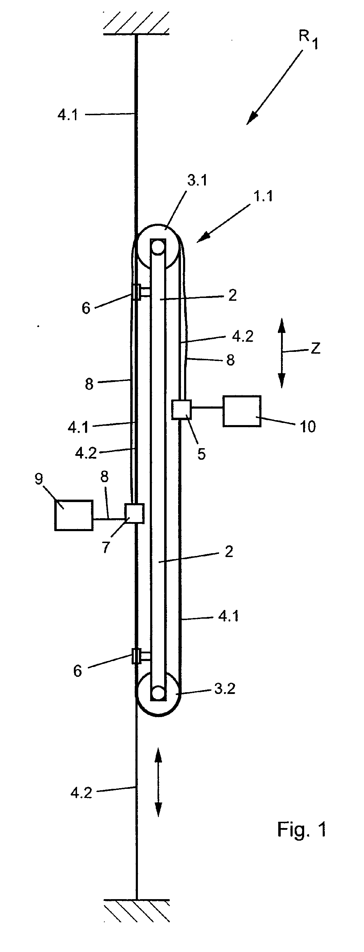

Gemäss Figur 1 weist eine erfindungsgemässe Vorrichtung R₁ eine Umlenkeinrichtung 1.1 auf, die mit vorzugsweise zwei zueinander an einem Distanzstück 2 beabstandet gelagerte Umlenkelemente 3.1, 3.2, insbesondere Umlenkrollen versehen ist. Diese sind drehbar gegenüber dem Distanzstück 2 gelagert. Das Distanzstück 2 kann ein Rohr, eine Schiene, ein Stab od. dgl. sein. Die Umlenkelemente 3.1, 3.2 können Umlenkwalzen, Rollen, perforierte Rollen od. dgl. sein. Dabei können auch eine Mehrzahl von Rollen, Walzen die Umlenkelemente 3.1, 3.2 bilden.

Die Umlenkeinrichtung 1.1 wird von einem, wie in Figur 1 etwas dicker dargestellten ersten Seilzug 4.1 aufgenommen, indem dieser im Bereich des Umlenkelementes 3.1 anliegt, zum Umlenkelement 3.2 geführt ist, dort um 180° umgelenkt wird und von dort in einem bewegbaren Punkt 5 endet.

Der dünner dargestellte Seilzug 4.2, der ebenfalls wie der Seilzug 4.1 ausserhalb fest gelagert ist und mit diesem in einer Flucht liegt, greift einseitig an das Umlenkelement 3.2 an und wird zum Umlenkelement 3.1 geführt, dort um 180° umgelenkt und schliesst an den bewegbaren Punkt 5 an. Am Punkt 5 sind die Seilzüge 4.1, 4.2 miteinander verbunden.

Die Umlenkelemente 3.1, 3.2 und/oder das Distanzstück 2 sind über Hülsen 6 od. dgl. Elemente mit dem zumindest einen Seilzug 4.1, 4.2 verbunden und führen auf diese Weise die Umlenkeinrichtung 1.1 an den Seilzügen 4.1, 4.2 in einer mit Doppelpfeil gekennzeichneten Z-Richtung.

Ausgehend von einem an dem Seilzug 4.1 und/oder 4.2 festgelegten Ausgangspunkt 7 wird eine Leitung 8, wie in Figur 1 dargestellt, zum Umlenkelemente 3.1 geführt, dort umgelenkt und gelangt zum bewegbaren Punkt 5. Dabei wird die Leitung 8 beispielsweise von einer Energiequelle 9 und/oder Datenübertragungseinrichtung zum festgelegten Ausgangspunkt 7 hingeführt. Dabei ist die Energiequelle 9 eine festgelegte Einrichtung bzw. Datenübertragungsquelle, die nicht bewegt wird.

Über den bewegbaren Punkt 5 gelangt die Leitung 8 auf ein ebenfalls in Z-Richtung bewegbares Element 10, welches beispielsweise eine Schiebetür, ein Tor, Garagentor, Schnellauftor sein kann.

Wird das Element 10 in dargestellter Z-Richtung bewegt, so wird über die Seilzüge 4.1 und 4.2 entsprechend die Umlenkeinrichtung 1.1 mitbewegt, so dass die Leitung 8 permanent spannungsfrei und formflüssig um das Umlenkelement 3.1 bewegt wird. Dabei lässt sich der Punkt 5 in dargestellter Z-Richtung hin- und herbewegen. Gleichzeitig fährt durch das Hin- und Herbewegen die Umlenkeinrichtung 1.1 ebenfalls in Z-Richtung, bis entweder der Punkt 5 in seiner einen Endlage nahe an dem Umlenkelement 3.1 oder in seiner anderen Endlage nahe am Umlenkelement 3.2 anliegt.

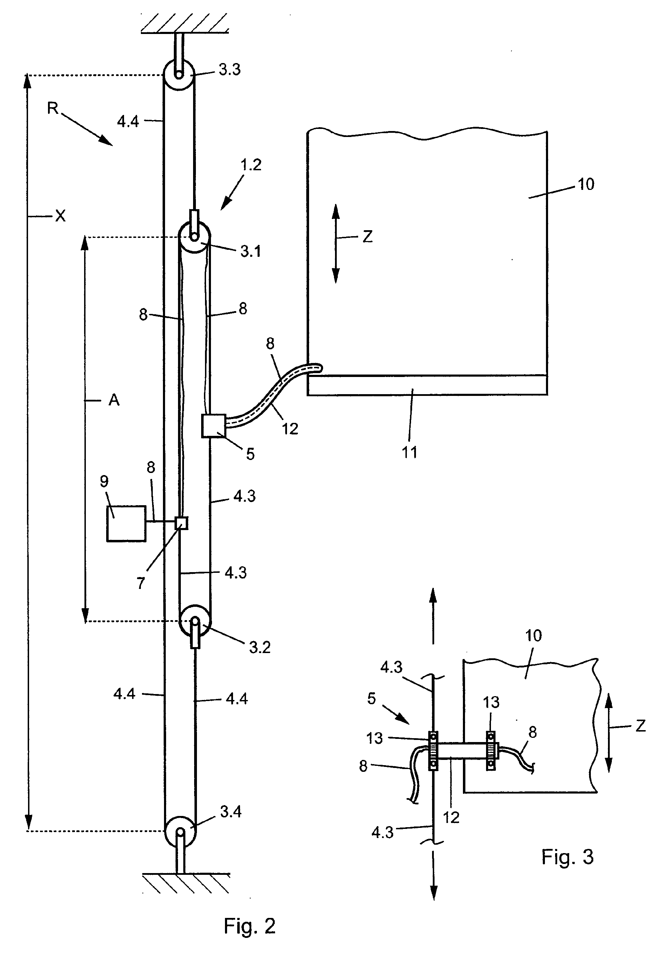

In einem weiteren Ausführungsbeispiel der vorliegenden Erfindung gemäss Figur 2 ist eine weitere Vorrichtung R₂ aufgezeigt, bei welcher eine Umlenkeinrichtung 1.2 aus zwei zueinander beabstandeten Umlenkelementen 3.1, 3.2 gebildet ist, die über einen Seilzug 4.3 beabstandet sind. Die einzelnen Umlenkelemente 3.1, 3.2 werden über einen weiteren Seilzug 4.4 auseinander gehalten, wobei der Seilzug 4.4 über weitere Umlenkelemente 3.3, 3.4 geführt ist. Dabei ist die Umlenkeinrichtung 1.2, bestehend aus den Umlenkelementen 3.1, 3.2 sowie Seilzug 4.3 zwischen den Umlenkelementen 3.3 und 3.4 mittels des Seilzuges 4.4 hin und her bewegbar.

Vorzugsweise sind die Umlenkelemente 3.3, 3.4 doppelt soweit beabstandet, wie ein Abstand A zwischen den Umlenkelementen 3.1 und 3.2 der Umlenkeinrichtung 1.2. Demnach entspricht der Abstand A einer halben maximalen Auslenkung X. Ebenfalls wird wie in Figur 1 beschrieben, ausgehend von einer Energiequelle 9 die Leitung 8 zum festgelegten Ausgangspunkt 7 geführt und dort mit dem Seilzug 4.3 fest verbunden und über das Umlenkelement 3.1 zum bewegbaren Punkt 5 umgelenkt. Von dort gelangt die Leitung 8 zu dem bewegbaren Element 10, welches beispielsweise ein Schiebetor, eine Schiebetüre od. dgl. sein kann. Dieses bewegbare Element 10 bzw. dieses Tor kann eine Schaltleiste 11 stirnseitig aufweisen, die auf eine entsprechendes Druck oder Tastsignal hin Daten über die Leitung 8 zur Energiequelle 9 bzw. Datenübertragungseinrichtung liefert. Ebenfalls sei hier daran gedacht, das bewegbare Element 10 bzw. das Tor mit Spannung zu versorgen, um beispielsweise Beleuchtungseinrichtungen, zusätzliche Sensoren oder Antriebselemente zu speisen.

Wird das Tor in Z-Richtung bewegt, so bewegt sich der Punkt 5 und somit die Umlenkeinrichtung 1.2 entsprechend der Bewegungsrichtung des Tores, wobei der Ausgangspunkt 7 fixiert bleibt.

Ferner soll im Rahmen der vorliegenden Erfindung liegen, dass die Leitung 8 auch, ausgehend von dem festgelegten Punkt 7 um das Umlenkelement 3.2 zum bewegbaren Punkt 5 geführt wird und von dort auf das Element 10 angelegt wird.

Zur Unterstützung einer Verbindung zwischen dem Element 10 und dem bewegbaren Punkt 5 kann ein Seilzug oder ein Schlauchelement 12 vorgesehen sein.

Auch soll im Rahmen der vorliegenden Erfindung liegen, beispielsweise die Leitung 8 zweiteilig auszubilden, wobei eine Phase, ausgehend von dem festgelegten Ausgangspunkt 7 über das Umlenkelement 3.1 zum bewegbaren Punkt 5 geführt und die andere Phase über das Umlenkelement 3.2 zum bewegbaren Punkt 5 geführt wird. Hierdurch liegen zwei unterschiedliche Phasen auch räumlich getrennt vor, so dass beispielsweise durch Beschädigungen der Isolierungen Kurzschlüsse verhindert werden.

Wie insbesondere aus Figur 3 hervorgeht hat sich als besonders vorteilhaft erwiesen, den bewegbaren Punkt 5 als Schellenelement 13 auszubilden, in welches die Enden des Seilzuges 4.3 eingreifen bzw. miteinander verbunden werden. Über das Schellenelement 13 wird das vorzugsweise elastisch ausgebildete Schlauchelement 12 eingespannt und mit dem bewegbaren Element 10 bzw. Torblatt od. dgl. in entsprechender Weise über ein weiteres Schellenelement 13 verbunden. Durch das Schlauchelement 12 wird die Leitung 8 geführt und ist vor mechanischer Einwirkung geschützt.

Ferner gleicht das elastisch ausgebildete Schlauchelement 12 ruckartige Anfahrbewegungen des Tores bzw. des bewegbaren Elementes 10 aus. Zudem wird durch die Elastizität des Schlauchelementes 12 ein kontinuierliches Bewegen des Seilzuges 4.3 und damit der Umlenkeinrichtung 1.2 gewährleistet.

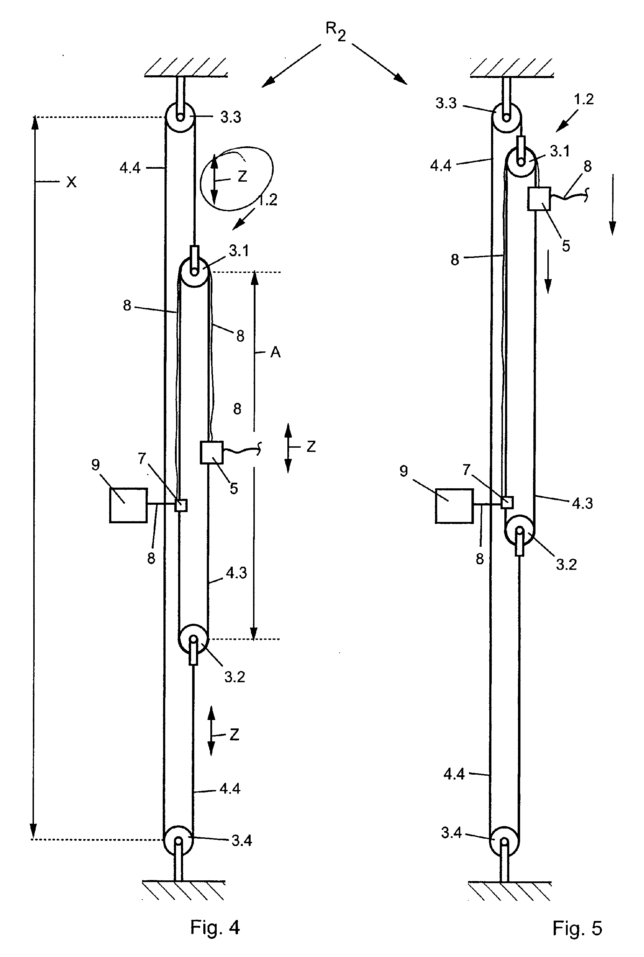

Figur 4 zeigt die Vorrichtung R₂ gemäss Figur 2 in einer weiteren Gebrauchslage. Aus dieser Lage lässt sich der Punkt 5 bzw. die Leitung 8 in Richtung Umlenkelement 3.3 oder 3.4 vollständig auslenken. Sind die Umlenkelemente 3.3, 3.4 in etwa in doppeltem Abstand A der Umlenkeinrichtung 1.2 auseinander angeordnet bzw. vorzugsweise drehbar festgelegt. So entspricht die Auslenkung X, die der Punkt 5 maximal bewegt werden kann, in etwa dem doppelten Abstand A.

In dem Ausführungsbeispiel gemäss Figur 5 ist der Punkt 5 nahe einer Endlage im Bereich des Umlenkelementes 3.3 ausgefahren und lässt sich, wie in Pfeilrichtung dargestellt, gegen das Umlenkelement 3.4 bewegen, wobei die Umlenkeinrichtung 1.2 ebenfalls gegen das Umlenkelement 3.4 bewegt wird. Während der Punkt 5 auf das Umlenkelement 3.4 zubewegt wird, wandert dieser von Umlenkelement 3.1 zu 3.2. Die Bewegung des Punktes 5 ist gekoppelt an die Bewegung der Umlenkeinrichtung 1.2 von Umlenkelement 3.3 zu 3.4.

Auf diese Weise lässt sich spannungsarm die Leitung 8 hin und her bewegen.

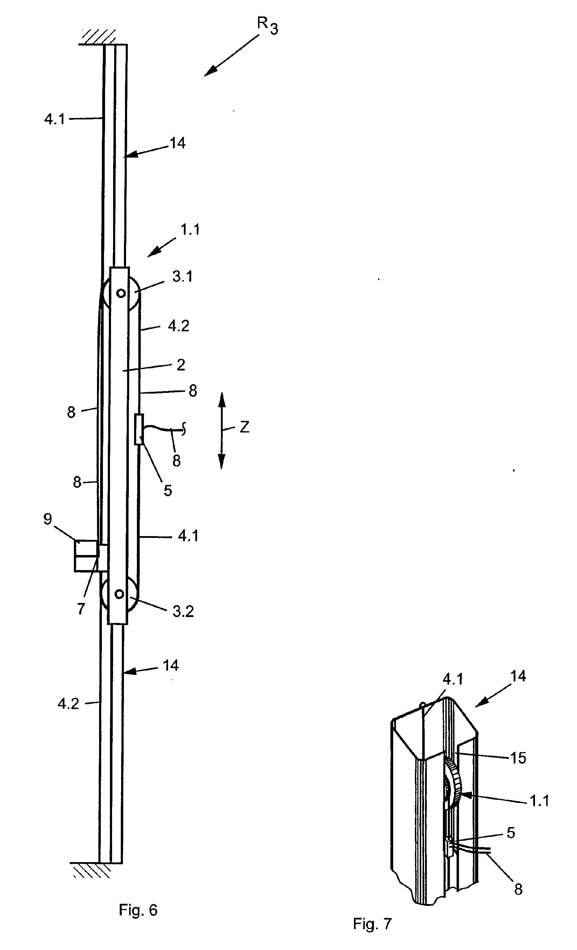

In Figur 6 ist eine weitere Vorrichtung R₃ aufgezeigt, die mit einer Umlenkeinrichtung 1.1, wie sie in Figur 1 beschrieben ist, versehen ist. Unterschiedlich ist, dass die Umlenkeinrichtung 1.1 in ein Profilelement 14, wie es lediglich schematisch dargestellt ist, eingesetzt ist. Dabei weist das Profilelement 14, wie es auch in Figur 7 angedeutet ist, einen Führungsschlitz 15 auf, der sich über die vollständige Länge des Profilelementes 14 erstreckt. In das Profilelement 14 ist die Umlenkeinrichtung 1.1 eingesetzt, wobei vorzugsweise jeweils endseitig die Seilzüge 4.1, 4.2 festgelegt sind. Aus dem Führungsschlitz 15 ragt der bewegbare Punkt 5 bzw. die Leitung 8 heraus und kann entlang dieses Führungsschlitzes 15 entlang des Profilelementes 14 in oben beschriebener Weise hin und her bewegt werden. Dies soll ebenfalls im Rahmen der vorliegenden Erfindung liegen.

### Positionszahlenliste

| | | | | | |
|---|---|---|---|---|---|
| 1 | Umlenkeinrichtung | 34 | | 67 | |
| 2 | Distanzstück | 35 | | 68 | |
| 3 | Umlenkelement | 36 | | 69 | |
| 4 | Seilzug | 37 | | 70 | |
| 5 | Bewegbarer Punkt | 38 | | 71 | |
| 6 | Hülsen | 39 | | 72 | |
| 7 | Festgelegter Punkt | 40 | | 73 | |
| 8 | Leitung | 41 | | 74 | |
| 9 | Energiequelle | 42 | | 75 | |
| 10 | Element | 43 | | 76 | |
| 11 | Schaltleiste | 44 | | 77 | |
| 12 | Schlauchelement | 45 | | 78 | |
| 13 | Schellenelement | 46 | | 79 | |
| 14 | Profilelement | 47 | | | |
| 15 | Führungsschlitz | 48 | | | |
| 16 | | 49 | | | |
| 17 | | 50 | | R₁ | Vorrichtung |
| 18 | | 51 | | R₂ | Vorrichtung |
| 19 | | 52 | | R₃ | Vorrichtung |
| 20 | | 53 | | | |
| 21 | | 54 | | A | Abstand |
| 22 | | 55 | | L | Länge |
| 23 | | 56 | | | |
| 24 | | 57 | | X | Auslenkung |
| 25 | | 58 | | | |
| 26 | | 59 | | Z | Richtung |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Führen von zumindest einer elektrischen Leitung (8) zur Energie- und/oder Datenübertragung für bewegbare Elemente (10) wie Türen und Tore,
**dadurch gekennzeichnet,**
**dass** die zumindest eine Leitung (8) zwischen einem festgelegten Ausgangspunkt (7) und dem bewegbaren Element (10) über zumindest eine Umlenkeinrichtung (1.1, 1.2) geführt ist.

2. Vorrichtung zum Führen von zumindest einer elektrischen Leitung (8) zur Energie- und/oder Datenübertragung für bewegbare Elemente (10) wie Türen und Tore, **dadurch gekennzeichnet, dass** die zumindest eine Leitung (8) mit einer bewegbaren Umlenkeinrichtung (1.1, 1.2) in Eingriff steht, welche gegenüber einem festgelegten Ausgangspunkt (7) der zumindest einen Leitung (8), bewegbar ist.

3. Vorrichtung nach Anspruch 1 oder 2, **dadurch gekennzeichnet, dass** die Umlenkeinrichtung (1.1, 1.2) zueinander beabstandete Umlenkelemente (3.1, 3.2), insbesondere Umlenkrollen aufweist.

4. Vorrichtung nach Anspruch 3, **dadurch gekennzeichnet, dass** wenigstens zwei zueinander beabstandete Umlenkelemente (3.1, 3.2) der Umlenkeinrichtung (1.1, 1.2) zugeordnet sind, deren Abstand (A) in etwa einer halben, maximalen Auslenkung (X) eines bewegbaren Punktes (5) entspricht.

5. Vorrichtung nach Anspruch 4, **dadurch gekennzeichnet, dass** die zumindest eine Leitung (8), ausgehend vom festgelegten Ausgangspunkt (7) um das eine und/oder das andere Umlenkelement (3.1, 3.2) zu einem bewegbaren Punkt (5) gelegt ist.

6. Vorrichtung nach Anspruch 5, **dadurch gekennzeichnet, dass** eine Länge der elektrischen Leitung (8) zwischen dem festgelegten Ausgangspunkt (7) und dem bewegbaren Führungspunkt (5) in etwa dem Abstand (A) der beabstandeten Umlenkelemente (3.1, 3.2) oder in etwa der halben, maximalen Auslenkung (X) des bewegbaren Punktes (5) entspricht.

7. Vorrichtung nach wenigstens einem der Ansprüche 4 bis 6, **dadurch gekennzeichnet, dass** die Umlenkeinrichtung (1.1, 1.2) und/oder der bewegbare Punkt (5) der Umlenkeinrichtung (1.1, 1.2) linear und/oder kurvenartig verläuft.

8. Vorrichtung nach wenigstens einem der Ansprüche 4 bis 7, **dadurch gekennzeichnet, dass** über den bewegbaren Punkt (5) die zumindest eine elektrische Leitung (8) auf das bewegbare Element (10), die Türe oder das Tor, geführt ist, wobei zwischen dem bewegbaren Punkt (5) und dem bewegbaren Element (10) ein elastisches Schlauchelement (12) vorgesehen ist.

9. Vorrichtung nach Anspruch 8, **dadurch gekennzeichnet, dass** das Schlauchelement (12) zur Aufnahme der Leitung (8) vorgesehen ist und elastisch gekoppelt den bewegbaren Punkt (5) der Umlenkeinrichtung (1.1, 1.2) beim Bewegen des bewegbaren Elementes (10) bzw. des Tores oder der Tür im Bereich der Auslenkung (X) bewegt.

10. Vorrichtung nach wenigstens einem der Ansprüche 3 bis 9, **dadurch gekennzeichnet, dass** die benachbarten Umlenkelemente (3.1, 3.2) über ein Distanzstück (2) fest zu einander beabstandet sind, wobei die Umlenkeinrichtung (1.1, 1.2), insbesondere das Distanzstück (2) an wenigstens einem Seilzug (4.1 bis 4.4) geführt ist.

11. Vorrichtung nach Anspruch 10, **dadurch gekennzeichnet, dass** der eine Seilzug (4.1) vom ersten Umlenkelement (3.1) zum zweiten Umlenkelement (3.2) geführt, um dieses umgelenkt und zum bewegbaren Punkt (5) geführt ist, wobei der zweite Seilzug (4.2) vom gegenüberliegenden Ende über das zweite Umlenkelement (3.2) zum ersten (3.1) geführt ist, um dieses umgelenkt und zum bewegbaren Punkt (5) geführt ist.

12. Vorrichtung nach Anspruch 10 oder 11, **dadurch gekennzeichnet, dass** die Umlenkeinrichtung (1.1, 1.2), insbesondere das Distanzstück (2) bewegbar gegenüber den Seilzügen (4.1 bis 4.4) über Führungselemente (6), insbesondere Hülsen geführt ist.

13. Vorrichtung nach wenigstens einem der Ansprüche 3 bis 9, **dadurch gekennzeichnet, dass** die Umlenkeinrichtung (1.1, 1.2), insbesondere deren gegenüberliegend angeordnete Umlenkelemente (3.1, 3.2) mit einem ersten umlaufenden Seilzug (4.3) verbunden sind, wobei die beiden Umlenkelemente (3.1, 3.2) über weitere ausserhalb liegende Umlenkelemente (3.3, 3.4) mittels eines zweiten Seilzuges (4.4) beabstandet sind, wobei zwischen den beiden Umlenkelementen (3.3, 3.4) die Umlenkeinrichtung (1.1, 1.2) bewegbar angeordnet ist.

14. Vorrichtung nach Anspruch 13, **dadurch gekennzeichnet, dass** über das eine oder das andere Umlenkelement (3.1, 3.2) der Umlenkeinrichtung (1.1, 1.2) die elektrische Leitung (8) von einem festgelegten Punkt (7) zum bewegbaren Punkt (5) geführt ist.

15. Vorrichtung nach Anspruch 13 oder 14, **dadurch gekennzeichnet, dass** die Umlenkelemente (3.3, 3.4), insbesondere Umlenkrollen des zweiten Seilzuges (4.4) in etwa im zweifachen Abstand (A) der ersten Umlenkelemente (3.1, 3.2) zueinander beabstandet sind.

16. Vorrichtung nach wenigstens einem der Ansprüche 1 bis 15, **dadurch gekennzeichnet, dass** die Umlenkeinrichtung (1.1, 1.2) in einem Profilelement (14) angeordnet ist, welches längsseitig mit einem Führungsschlitz (15) versehen ist, entlang welchem die elektrische Leitung (8), insbesondere der bewegbare Punkt (5) hin und her bewegbar ist.

17. Vorrichtung nach wenigstens einem der Ansprüche 3 bis 16, **dadurch gekennzeichnet, dass** die Leitung (8) mehrteilig ausgebildet ist und eine Phase der Leitung (8) über das eine Umlenkelement (3.1) zum Punkt (5) und eine weitere Phase der Leitung (8) über das andere Umlenkelement (3.2) zum Punkt (5) geführt ist.
